# EUROPÄISCHE PATENTSCHRIFT

(11) **EP 2 813 861 B1**
(45) Veröffentlichungstag und Bekanntmachung des Hinweises auf die Patenterteilung: **29.03.2017**
(21) Anmeldenummer: 14172177.9
(22) Anmeldetag: 12.06.2014
(51) Int. Cl.: G01S 15/93, B60R 21/00

(54) **Verfahren zum Bestimmen eines Wasserstands in der Umgebung eines Kraftfahrzeugs, Fahrerassistenzvorrichtung und Kraftfahrzeug**
A method for determining a water level in the vicinity of a motor vehicle , driver assistance device and motor vehicle
Procédé de détermination d'un niveau d'eau dans le voisinage d'un véhicule automobile, le dispositif d'assistance au conducteur et de véhicules automobiles

(30) Priorität: 13.06.2013 DE 102013009858
(43) Veröffentlichungstag der Anmeldung: 17.12.2014
(73) Patentinhaber: Valeo Schalter und Sensoren GmbH, 74321 Bietigheim-Bissingen (DE)
(72) Erfinder: Hallek, Michael, 74321 Bietigheim-Bissingen (DE)

(56) Entgegenhaltungen:
- WO-A1-2012/123554
- GB-A- 2 486 452

## Beschreibung

Die Erfindung betrifft ein Verfahren zum Bestimmen eines Wasserstands in einem Umgebungsbereich eines Kraftfahrzeugs mittels einer Fahrerassistenzvorrichtung des Kraftfahrzeugs. Die Erfindung betrifft außerdem eine Fahrerassistenzvorrichtung zum Durchführen eines solchen Verfahrens sowie ein Kraftfahrzeug mit einer solchen Fahrerassistenzvorrichtung.

Das Bestimmen des Wasserstands in der Umgebung eines Kraftfahrzeugs ist bereits eine - insbesondere für Geländewagen - verfügbare Technologie. Üblicherweise werden hier Ultraschallsensoren von Parkassistenzsystemen verwendet, welche an dem vorderen und dem hinteren Stoßfänger des Kraftfahrzeugs angebracht sind. Hierzu können aber auch zusätzliche Sensoren verwendet werden, die dann als Abstands- beziehungsweise Wasserstandssensoren fungieren und gezielt durch ein Erfassen von Reflexionen den vertikalen Abstand zu einer Wasseroberfläche bestimmen.

Beispielsweise ist aus dem Dokument DE 10 2009 060 190 A1 ein Überflutungssystem bekannt. Das System umfasst neben Überflutungserkennungssensoren auch einen Abstands- bzw. Wasserstandssensor, mittels welchem der vertikale Abstand zu der Wasseroberfläche gemessen wird. Dieser Abstandssensor ist an einem Boden des Kraftfahrzeugs angebracht und weist eine Haupterfassungsrichtung auf, welche parallel zur Kraftfahrzeughochachse verläuft. Mittels dieses Sensors kann ermittelt werden, wie tief sich das Kraftfahrzeug im Wasser befindet und ob automatisch bestimmte Funktionen, beispielsweise das Schließen eines Luftansaugkanals eines Motors, ausgeführt werden sollen.

In der WO 2012/123554 A1 ist ein Fahrzeug mit einem Ultraschallsensor beschrieben, der erkennen kann, ob das Fahrzeug sich in einem Gewässer befindet oder im Begriff ist, in ein Gewässer hinein zu fahren.

Die Bestimmung des Wasserstands wird im Stand der Technik durch Mehrfachreflexionen und durch Reflexionen an Teilen des Kraftfahrzeugs bzw. geometriebedingt auch am Kraftfahrzeug selbst erschwert. Aufgrund dieser Mehrfachreflexionen ist es häufig nicht oder nur bedingt möglich, die Wasseroberfläche von Anbauteilen des Kraftfahrzeugs zu unterscheiden.

Es ist Aufgabe der Erfindung, eine Lösung aufzuzeigen, wie bei einem Verfahren der eingangs genannten Gattung die Genauigkeit und Zuverlässigkeit bei dem Bestimmen des Wasserstands in der Umgebung eines Kraftfahrzeugs erhöht werden kann.

Diese Aufgabe wird erfindungsgemäß durch ein Verfahren, durch eine Fahrerassistenzvorrichtung und durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Bestimmen eines Wasserstands in einem Umgebungsbereich eines Kraftfahrzeugs mittels einer Fahrerassistenzvorrichtung des Kraftfahrzeugs. Zunächst wird ein Sendesignal in den Umgebungsbereich des Kraftfahrzeugs mittels eines Sensors der Fahrerassistenzvorrichtung ausgesendet. Dann wird ein in dem Umgebungsbereich reflektierter Signalanteil des Sendesignals als Empfangssignal empfangen, wobei das Empfangssignal mehrere Empfangsechos umfasst. Ein nächster Schritt ist ein Bestimmen eines zeitlichen Versatzes, also eines zeitlichen Abstandes, zwischen dem Sendesignal und einem Empfangsecho des Empfangssignals, insbesondere einem Echo, welches als erstes an dem Sensor eingetroffen ist. Dabei wird überprüft, ob der zeitliche Versatz innerhalb eines vorgegebenen Wertebereichs um einen Versatzwert liegt, welcher einem Abstand eines vorgegebenen Anbauteils des Kraftfahrzeugs zum Sensor entspricht. Falls der zeitliche Versatz außerhalb des vorgegebenen Wertebereichs liegt, wird der Wasserstand direkt anhand dieses zeitlichen Versatzes bestimmt. Falls jedoch der zeitliche Versatz innerhalb des vorgegebenen Wertebereichs liegt, wird ein zeitlicher Versatz zwischen dem Sendesignal und zumindest einem weiteren Empfangsecho des Empfangssignals für das Bestimmen des Wasserstands berechnet.

Das Verfahren hat den Vorteil, dass eine Fehleinschätzung des Wasserstands vermieden wird und eine zuverlässigere Bestimmung des Wasserstands trotz Empfangsechos verursachender Anbauteile erreicht wird, da Empfangsechos, die nicht dem Wasser, sondern dem Anbauteil des Fahrzeugs, insbesondere einem Trittbrett, entstammen, ignoriert werden können. Diese Empfangsechos könnten sonst fälschlicherweise dem Wasserstand zugeordnet werden, was zu einer Fehleinschätzung des Wasserstands führen würde. Um dies zu vermeiden, wird ein innerhalb des vorgegebenen Wertbereichs liegender zeitlicher Versatz als ein Indiz dafür betrachtet, dass ein zu dem Versatz gehöriges Empfangsecho von dem Anbauteil und nicht dem Wasserstand verursacht wird. Dies kann über ein Auswerten weiterer Empfangsechos überprüft werden, sodass in allen Fällen, also falls ein Anbauteil Empfangsechos hervorruft oder nicht, sämtliche Wasserstände, gleich ob über oder unter dem Anbauteil oder auf gleicher Höhe des Anbauteils, zuverlässig bestimmt werden können. So muss bei der Gestaltung der Außenfläche des Kraftfahrzeugs nicht auf die Funktionsfähigkeit der Fahrerassistenzvorrichtung Rücksicht genommen werden. Vielmehr passt sich die Fahrerassistenzvorrichtung der geometrischen Form bzw. der mechanischen Ausgestaltung des Kraftfahrzeugs an, was eine Anwendung in unterschiedlichen Fahrzeugreihen erleichtert.

Da sowohl das Sendesignal als auch das Empfangssignal beziehungsweise die einzelnen Empfangsechos des Empfangssignals eine zeitliche Ausdehnung haben, wird der zeitliche Versatz vorzugsweise aus dem zeitlichen Unterschied festgesetzter relativer Bezugspunkte innerhalb von Sendesignal und Empfangsecho bestimmt. Hier kann beispielsweise für das Sendesignal der Endpunkt des Signals und für die einzelnen Empfangsechos beispielsweise die Maxima der Intensität der Empfangsechos gewählt werden.

Als Sendesignal wird vorzugsweise ein einzelner Impuls, also das durch eine einzelne Ansteuerung oder Anregung des Sensors (zum Beispiel einer Membran) zu einer Sendeaktivität hervorgerufene Signal, verwendet. Das Ende dieses Impulses ist gleichzeitig vorzugsweise der Beginn eines Messfensters. Während dieses Messfensters, das insbesondere eine vorgegebene Länge hat, wird der Sensor in einem Empfangsmodus betrieben, sodass alle während des Messfensters am Sensor eintreffenden Reflexionen des Sendesignals als Empfangssignal registriert werden.

Der Wertebereich, in dem der zeitliche Versatz liegen muss, um ein Auswerten weiterer Empfangsechos nach sich zu ziehen, ist durch einen Versatzwert und einen Abweichungsbereich um diesen Versatzwert bestimmt. Hierbei entspricht der Versatzwert dem räumlichen Abstand zwischen dem Sensor und einem bestimmten Punkt des Anbauteils, insbesondere einem Mittelpunktes oder einem Punkt auf einer dem Sensor zugewandten Oberfläche des Anbauteils. Der Abweichungsbereich wird dann vorteilhafterweise so festgelegt, dass der zeitliche Versatz der durch das Anbauteil verursachten Empfangsechos innerhalb des Wertebereichs liegt.

Insbesondere ist vorgesehen, dass als Sensor ein Ultraschallsensor verwendet wird, sodass das Sendesignal mittels des Ultraschallsensors ausgesendet wird. Das hat den Vorteil, dass auf bestehende Fahrerassistenzvorrichtungen beziehungsweise deren vorhandene Sensoren und Recheneinheiten zurückgegriffen werden kann, und so Kosten eingespart werden.

Eine bevorzugte Ausgestaltung der Erfindung sieht vor, dass das Sendesignal mittels eines Sensors ausgesendet wird, dessen Haupterfassungsrichtung parallel zur Fahrzeughochachse orientiert ist. Der Sensor weist hier insbesondere nach unten in Richtung zum Boden. Bei einem nicht geneigten Kraftfahrzeug weist die Haupterfassungsrichtung also senkrecht zum Boden in dessen Richtung. Dies hat den Vorteil, dass durch stark ausgeprägte Empfangsechos der Wasserstand beziehungsweise Boden in einer besonders robusten Weise erfasst wird.

Bevorzugt wird das Sendesignal mittels eines Sensors ausgesendet, der an einem weiteren Anbauteil des Kraftfahrzeugs angeordnet ist, welches ein diesem Anbauteil benachbartes Außenbeplankungselement des Kraftfahrzeugs nach außen hin, also in Richtung senkrecht zur Fahrzeughochachse beziehungsweise in horizontaler Richtung vom Fahrzeug weg, überragt. Dabei ist der Sensor insbesondere an einem Außenspiegel des Kraftfahrzeugs angeordnet. Die im Vergleich zu einer Anbringung des Sensors am Fahrzeugboden erhöhte Position des Sensors hat den Vorteil, dass Verschmutzungen vermieden werden und höhere Wasserstände erfassbar sind. Die Anbringung des Sensors in einem Abstand zur Außenbeplankung hat den Vorteil, dass weniger Störechos, beispielsweise durch gewölbte Außenseiten des Kraftfahrzeugs verursacht, auftreten und die Messung der Empfangsechos erleichtert wird. Ferner können eventuell bereits vorhandene Sensoren, die beispielsweise auf ein Detektieren einer Annäherung an ein Schlüsselloch ausgelegt sind, verwendet werden, was zusätzlich Kosten spart.

Insbesondere ist vorgesehen, dass, falls der zeitliche Versatz des zumindest einen weiteren Empfangsechos gegenüber dem Sendesignal außerhalb des vorgegebenen Wertebereichs liegt, der Wasserstand anhand des zeitlichen Versatzes dieses Empfangsechos bestimmt wird. Dies hat den Vorteil, dass es so möglich ist, den tatsächlichen Wasserstand insbesondere dann zu ermitteln, wenn er unterhalb eines Anbauteils liegt, welches ebenfalls Echos verursacht. Das ist der Fall, da so ein Echo, weiches Anbauteilen des Kraftfahrzeugs, wie beispielsweise einem Trittbrett, entstammt, ignoriert wird beziehungsweise nicht in die Auswertung des Wasserstandes einfließt.

Eine vorteilhafte Ausführungsform des Verfahrens sieht vor, dass mehrere Empfangsechos des Empfangssignals in der Reihenfolge ihres Eintreffens am Sensor auf ihren jeweiligen zeitlichen Versatz hin überprüft werden und der Wasserstand anhand desjenigen Empfangsechos bestimmt wird, dessen Versatz als erster als außerhalb des vorgegebenen Wertebereiches liegend detektiert wird. Dies hat den Vorteil, dass ein oder auch mehrere Anbauteile des Kraftfahrzeugs, welche Empfangsechos verursachen, für die Ermittlung des Wasserstandes ignoriert werden können. Ferner gewährleistet die Nutzung des ersten als außerhalb des vorgegebenen Wertebereichs liegend detektierten Versatzes eine schnellstmögliche Bestimmung des Wasserstandes, da nicht auf das Erfassen weiterer Echos gewartet werden muss.

Eine weitere Ausführungsform des Verfahrens sieht vor, dass, falls die zeitlichen Versätze aller Empfangsechos des Empfangssignals innerhalb des vorgegebenen Bereichs liegen, ein Neigungswinkel des Kraftfahrzeugs, insbesondere der Rollwinkel, also ein Drehwinkel des Kraftfahrzeugs um die Längsachse, bestimmt wird und dieser Neigungswinkel mit einem vorgegebenen Grenzwert verglichen wird. Das hat den Vorteil, dass durch die Feststellung der Lage des Fahrzeugs im Raum eine Einschätzung über die Validität beziehungsweise die Plausibilität der Nutzung der zeitlichen Versätze für die Wasserstandsbestimmung getroffen werden kann.

Insbesondere ist hier vorgesehen, dass das Bestimmen des Wasserstands anhand des Empfangssignals unterbleibt, falls der Neigungswinkel des Kraftfahrzeugs größer ist als der vorgegebene Grenzwert. Dann steht der Sensor nämlich mit seiner Haupterfassungseinrichtung in einem den vorgegebenen Grenzwert übertreffenden Winkel schräg zur Wasseroberfläche. Insbesondere wenn der Sensor auf der nach oben weisenden Seite des Kraftfahrzeugs angeordnet ist, wird bei einem den Grenzwert übertreffendem Neigungswinkel also angenommen, dass das Sendesignal nicht durch die Wasseroberfläche zu dem Sensor reflektiert wird. Das hat den Vorteil, dass erkannt wird, wenn eine Auswertung der Sensordaten für eine Ermittlung des Wasserstandes nicht sinnvoll ist, sodass die Sensordaten verworfen werden können.

Ferner ist bevorzugt, dass der Wasserstand anhand des zeitlichen Versatzes zumindest eines der innerhalb des vorbestimmten Wertebereichs liegenden Empfangsechos gegenüber dem Sendesignal bestimmt wird, falls der Neigungswinkel des Fahrzeugs kleiner ist als der vorgegebene Grenzwert. Das hat den Vorteil, dass sichergestellt ist, dass das Empfangsecho, welches für die Bestimmung des Wasserstandes verwendet wird, tatsächlich an der Wasseroberfläche reflektiert wurde und der Wasserstand so zuverlässig in seiner Höhe bestimmt wird.

Hier ist ferner vorteilhaft, dass der Wasserstand anhand desjenigen Empfangsechos bestimmt wird, welches den kleinsten zeitlichen Versatz aufweist. Das hat den Vorteil, dass der Wasserstand im Zweifel eher überschätzt wird und so gegenüber Wassereinwirkung empfindliche Teile zuverlässiger, beispielsweise durch automatisch ausgelöste Funktionen der Fahrzeugelektronik, geschützt werden können.

Optional kann der aktuelle Neigungswinkel auch bei der Berechnung des Wasserstands berücksichtigt, also in eine Berechnung miteinbezogen, werden.

Die Erfindung betrifft ferner eine Fahrerassistenzvorrichtung für ein Kraftfahrzeug, mit einem Sensor zum Aussenden eines Sendesignals in den Umgebungsbereich des Kraftfahrzeugs und zum Empfangen eines im Umgebungsbereich reflektierten Signalanteils des Sendesignals als ein Empfangssignal, wobei das Empfangssignal mehrere Empfangsechos umfasst. Zur Fahrerassistenzvorrichtung gehört eine Recheneinheit zum Bestimmen eines Wasserstands in dem Umgebungsbereich anhand des Empfangssignals, wobei die Recheneinheit dazu ausgelegt ist, einen zeitlichen Versatz zwischen dem Sendesignal und einem der Empfangsechos zu bestimmen und zu überprüfen, ob der zeitliche Versatz innerhalb eines vorgegebenen Wertebereichs um einen Versatzwert liegt, welcher einem Abstand eines Anbauteils des Kraftfahrzeugs zum Sensor entspricht. Falls der zeitliche Versatz außerhalb des vorgegebenen Wertebereichs liegt, wird der Wasserstand anhand dieses zeitlichen Versatzes bestimmt. Falls der zeitliche Versatz innerhalb des vorgegebenen Wertebereichs liegt, wird ein zeitlicher Versatz zwischen dem Sendesignal und zumindest einem weiteren Empfangsecho des Empfangssignals für das Bestimmen des Wasserstands bestimmt.

Die Erfindung betrifft ferner ein Kraftfahrzeug mit einer solchen Fahrerassistenzvorrichtung.

Die mit Bezug auf das erfindungsgemäße Verfahren vorgestellten bevorzugten Ausführungsformen und deren Vorteile geltend entsprechend für die erfindungsgemäße Fahrerassistenzvorrichtung sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Ausführungsbeispiele der Erfindung werden nachfolgend anhand schematischer Zeichnungen näher erläutert. Es zeigen:
- Fig. 1: in schematischer Darstellung ein Kraftfahrzeug mit einer Fahrerassistenzvorrichtung gemäß einer Ausführungsform der Erfindung;
- Fig. 2: ein Flussdiagramm eines Verfahrens gemäß einer Ausführungsform der Erfindung;
- Fig. 3: einen beispielhaften zeitlichen Verlauf eines Sendesignals und eines zugeordneten Empfangssignals; und
- Fig. 4: einen weiteren beispielhaften zeitlichen Verlauf von Sende- und Empfangssignal.

In den Figuren werden gleiche oder funktionsgleiche Elemente mit den gleichen Bezugszeichen versehen.

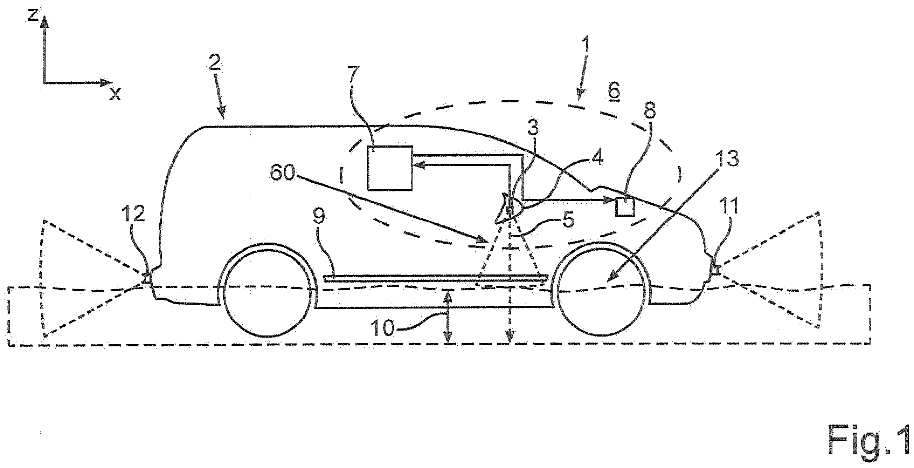

In Fig. 1 ist eine schematische Darstellung eines Kraftfahrzeugs 2 mit einer Fahrerassistenzvorrichtung 1 gemäß einer Ausführungsform der Erfindung gezeigt. Die Fahrerassistenzvorrichtung 1 umfasst einen Sensor 3, beispielsweise einen Ultraschallsensor, der an einem Anbauteil 4, hier einem Außenspiegel des Kraftfahrzeugs 2, angebracht ist. Der Sensor 3 weist einen Erfassungsbereich 60 sowie eine Haupterfassungsrichtung 5 auf, welche in Richtung des befahrenen Untergrunds zeigt und parallel zur Hochachse z bzw. senkrecht zur Längsachse x des Kraftfahrzeugs 2 verläuft.

Der Sensor 3 ist mit einer Recheneinheit 7 gekoppelt, die darauf ausgelegt ist, Informationen des Sensors 3 zu verarbeiten. Diese Recheneinheit 7 ist auch an eine Fahrzeugelektronik 8 gekoppelt und kann gegebenenfalls automatische Funktionen, beispielsweise das Schließen von Ansaugschlitzen und/oder einer Auspuffanlage, abrufen. Das Kraftfahrzeug 2 kann auch im Rahmen der Fahrerassistenzvorrichtung 1 über weitere Sensoren, wie Überflutungssensoren oder weitere Ultraschallsensoren 11, 12 verfügen, die an dem vorderen und dem hinteren Stoßfänger angeordnet sind.

Im aktivierten Zustand sendet der Sensor 3 in seinen Erfassungsbereich 60 und daher in einen Umgebungsbereich 6 des Kraftfahrzeugs 2 Sendesignale aus, die beispielsweise Ultraschallsignale sind. Hierbei werden die Sendesignale in den Umgebungsbereich 6 entlang der Haupterfassungsrichtung 5 in Richtung zum Untergrund ausgesendet. Die Signale werden im Umgebungsbereich 6 an verschiedenen Objekten reflektiert. Diese Objekte umfassen im vorliegenden Fall ein Trittbrett 9 und eine Wasseroberfläche 13. Das Trittbrett 9 stellt ein Anbauteil des Kraftfahrzeugs 2 im Sinne der Erfindung dar. Es können jedoch noch weitere Objekte, wie zusätzliche Anbauteile des Kraftfahrzeugs 2, der Untergrund oder Steine, zu Reflexionen des Sendesignals führen. Die in dem Umgebungsbereich 6 reflektierten Anteile des Sendesignals werden von dem Sensor 3 als Empfangssignal mit mehreren Empfangsechos erfasst. Insbesondere werden hier einige Empfangsechos auf besagte reflektierende Objekte, wie das Trittbrett 9 und die Wasseroberfläche 13, zurückzuführen sein. Hierbei entspricht der zeitliche Versatz des Empfangsechos relativ zum Sendesignal jeweils dem räumlichen Abstand zwischen Sensor und dem Ort, an dem die Reflexion des Sendesignals stattgefunden hat. Durch den zeitlichen Versatz kann folglich der räumliche Abstand von Objekten und so auch die Höhe des Wasserstandes 10 berechnet werden. Dies geschieht in der Recheneinheit 7. Diese kann zur Berechnung des Wasserstandes 10 noch weitere Messgrößen, wie beispielsweise einen Neigungswinkel, insbesondere einen Rollwinkel, heranziehen. Gegebenenfalls veranlasst die Recheneinheit 7 automatisch weitere Funktionen, wie zum Beispiel das Schließen von Ansaugschlitzen oder eines Auspuffs.

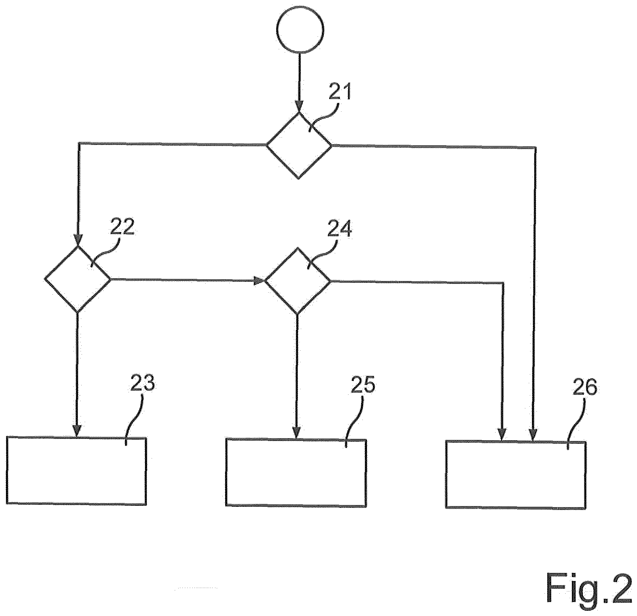

In Fig. 2 ist ein Flussdiagramm eines Verfahrens gemäß einer Ausführungsform der Erfindung gezeigt. In dem ersten Schritt 21 wird bestimmt, ob der kleinste zeitliche Versatz zwischen den Empfangsechos einerseits und dem Sendesignal andererseits - also der zeitliche Versatz zwischen dem ersten am Sensor eintreffenden Empfangsecho und dem Sendesignal - innerhalb eines vorbestimmten, durch Reflexionen verursachende Anbauteile 9 (Fig. 1) des Kraftfahrzeugs 2, etwa das Trittbrett 9 - definierten Wertebereichs liegt. Dieser Wertebereich umfasst einen Versatzwert, der dem Abstand zwischen einem bestimmten Punkt auf dem Anbauteil (hier dem Trittbrett 9) und dem Sensor 3 entspricht. Der Wertebereich ist dann vorzugsweise so vorbestimmt, dass er die Werte aller zeitlichen Versätze von Empfangsechos beinhaltet, welche einer Reflexion des Sendesignals an dem Anbauteil entstammen.

Liegt der kleinste zeitliche Versatz nicht innerhalb des Wertebereichs, so wird in Schritt 26 der Wasserstand 10 (Fig. 1) anhand dieses zeitlichen Versatzes bestimmt. Liegt der zeitliche Versatz innerhalb des vorbestimmten Wertebereichs, so wird in Schritt 22 überprüft, ob der zeitliche Versatz des zweiten, dritten usw. Empfangsechos außerhalb des vorbestimmten Bereiches liegt. Liegt eines der Empfangsechos außerhalb des vorgegebenen Bereiches, so wird der Wasserstand 10 in Schritt 23 anhand des ersten Empfangsechos, dessen Versatz außerhalb des vorgegebenen Wertebereichs liegt, bestimmt. Die anderen Empfangsechos werden ausgeblendet beziehungsweise für die Bestimmung des Wasserstands 10 ignoriert. Liegen die zeitlichen Versätze sämtlicher Empfangsechos innerhalb des vorgegebenen Wertebereichs, so wird in einem Schritt 24 die Neigung des Fahrzeugs, genauer gesagt der Rollwinkel des Fahrzeugs, überprüft. Steht das Fahrzeug so schräg, dass der Rollwinkel größer ist als ein Grenzwert und so der verwendete Sensor 3 den Wasserstand 10 nicht erfassen kann, wird in Schritt 25 die gesamte Messung, also sämtliche Empfangsechos, verworfen. Ist der Neigungswinkel des Kraftfahrzeugs kleiner als der Grenzwert und erlaubt so eine Wasserstandsmessung über den Sensor 3, so wird in Schritt 26 ohne weitere Filtermaßnahmen der Wasserstand 10 aus einem der gemessenen zeitlichen Versätze, beispielsweise dem geringsten zeitlichen Versatz, bestimmt.

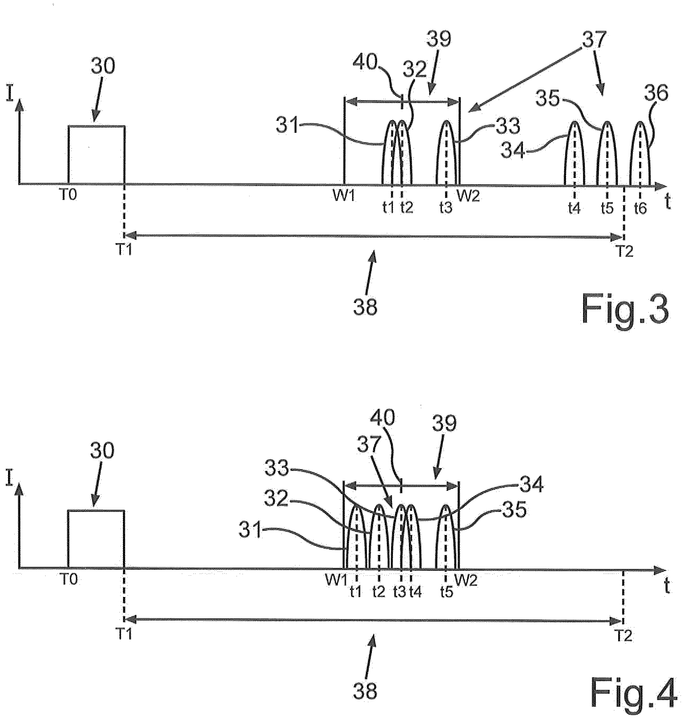

Fig. 3 zeigt einen beispielhaften Intensitätsverlauf eines Sendesignals 30 und eines Empfangssignals 37. Angetragen ist hier die Intensität I der Signale über der Zeit t. Zu einem Zeitpunkt T0 beginnt das Sendesignal 30, welches sich bis zu dem Zeitpunkt T1 erstreckt. Dies bedeutet, dass innerhalb eines Zeitintervalls zwischen T0 und T1 eine Membran des Sensors angeregt wird, um so das Sendesignal zu erzeugen bzw. auszusenden. Mit dem Zeitpunkt T1, welches das Ende des Sendesignals 30 bezeichnet, beginnt ein Messfenster 38, in dem der Sensor 3 im Mess- oder Empfangsmodus betrieben wird. Dies ist bis zum Ende des Zeitfensters 38 bei T2 der Fall. Die beiden Zeitpunkte W1 und W2 innerhalb des Zeitfensters 38 bezeichnen Anfangsbeziehungsweise Endpunkt des vorgegebenen Wertebereichs 39. Der Wertebereich 39 erstreckt sich um einen Versatzwert 40, der zum Beispiel der Mittelpunkt des Wertebereichs 39 sein kann und dem Abstand des für die Wasserstandsbestimmung auszublendenden Anbauteils 9 von dem Sensor 3 entspricht. Das Empfangssignal 37 besteht hier aus den Empfangsechos 31 bis 36. Hierbei ist zu beachten, dass das Empfangsecho 36 bereits außerhalb des Zeitfensters 38 liegt, das heißt von dem Sensor 3 nicht mehr detektiert wird. Die Empfangsechos 31, 32 und 33 liegen innerhalb des Wertebereichs 39. Die Empfangsechos 34 und 35 liegen außerhalb des vorbestimmten Wertebereichs 39. Hierbei wird der Zeitpunkt eines Empfangsechos als der Zeitpunkt seiner maximalen Intensität festgesetzt. Somit trifft das Empfangsecho 31 zum Zeitpunkt t1, das Empfangsecho 32 zum Zeitpunkt t2, die Empfangsechos 33, 34, 53, 36 jeweils zum Zeitpunkt t3, t4, t5 und t6 ein. Der zeitliche Versatz eines Empfangsechos 31 bis 36 berechnet sich dann durch die Differenz des Zeitpunktes T1 als Ende des Sendesignals 30 und dem Zeitpunkt des jeweiligen Empfangsechos 31 bis 36. Da das Empfangsecho 31 hier als erstes am Sensor 3 eintrifft, wird zunächst der zeitliche Versatz (t1 - T1) des Empfangsechos 31 bestimmt. Dieser liegt im gezeigten Beispiel innerhalb des Wertebereichs 39. Als Folge wird als nächstes der zeitliche Versatz des nächsten Empfangsechos 32 bestimmt, hier mit dem gleichen Resultat. Auch ein anschließendes Bestimmen des zeitlichen Versatzes eines weiteren Empfangsechos 33 führt im vorliegenden Beispiel zum gleichen Ergebnis.

Erst ein Bestimmen des zeitlichen Versatzes eines nächsten Empfangsechos 34 ergibt in Fig. 3 einen zeitlichen Versatz, der außerhalb des vorgegebenen Wertebereichs 39 liegt. Folglich wird dieses Empfangsecho 34 zum Zeitpunkt t4 zum Bestimmen des Wasserstands 10 herangezogen. Die Empfangsechos 31 bis 33 werden verworfen beziehungsweise die entsprechenden Daten gelöscht.

In Fig. 4 ist erneut ein beispielhafter Intensitätsverlauf von Sende- und Empfangssignal 30, 37 gezeigt. Aufgetragen ist die Intensität I der Signale über der Zeit t. Ähnlich wie in Fig. 3 bestimmen die Zeitpunkte T0 und T1 Beginn und Ende des Sendesignals 30. Das Ende des Sendesignals 30 zum Zeitpunkt T1 ist gleichzeitig der Beginn des Zeitfensters 38, in dem der Sensor 3 im Empfangsmodus betrieben wird und welches zum Zeitpunkt T2 endet. Wieder ist ein Empfangssignal 37 dargestellt, welches zum Beispiel aus den Empfangsechos 31 bis 35 besteht. Sämtliche Empfangsechos 31 bis 35 beziehungsweise ihre zeitlichen Versätze zum Sendesignal 30 liegen im vorliegenden Beispiel im vorgegeben, um den Versatzwert 40 zentrierten Wertebereich 39. Analog zum in Fig. 3 dargestellten Sachverhalt werden die zu den einzelnen Empfangsechos 31 bis 35 gehörigen zeitlichen Versätze aus den Abständen der den maximalen Intensitätspunkt der Empfangsechos 31 bis 35 bestimmenden Zeitpunkte t1 bis t5 und dem Ende T1 des Sendesignals 30 errechnet. Analog zu Fig. 3 wird im Verfahren zunächst der zeitliche Versatz des Empfangsechos 31 bestimmt, welcher hier innerhalb des Wertebereichs 39 liegt. Folglich werden die zeitlichen Versätze der weiteren Empfangsechos 32 bis 35 bestimmt, da diese sämtlich innerhalb des vorgegebenen Wertebereichs 39 liegen. Nachdem kein einziges Empfangsecho 31 bis 35 außerhalb des vorgegebenen Wertebereichs 39 und gleichzeitig innerhalb des Zeitfensters 38 liegt, kann kein zeitlicher Versatz berechnet werden, der eine direkte Bestimmung des Wasserstandes 10 ermöglicht. Im vorliegenden Fall würde also der Wasserstand 10 anhand der Empfangsechos 31 bis 35 bestimmt werden, zum Beispiel falls der Neigungswinkel des Fahrzeugs einen bestimmten Grenzwert nicht überschreitet. Dann kann nämlich davon ausgegangen werden, dass die Empfangsechos 31 bis 35 nicht von einem Anbauteil, wie dem Trittbrett 9, stammen, sondern Reflexionen des Sendesignals 30 an der Wasseroberfläche 13 sind. Sollte der Neigungswinkel des Fahrzeuges einen bestimmten Grenzwert überschreiten, so wird davon ausgegangen, dass die Empfangsechos 31 bis 35 sämtlich auf das hervorstehendes Anbauteil des Kraftfahrzeugs, beispielsweise das Trittbrett 9 zurückzuführen sind, da die Ausrichtung des Sensors 3 in diesem Falle ein Erfassen von Empfangsechos, die an der Wasseroberfläche reflektiert wurden, unmöglich macht.

## Patentansprüche

1. Verfahren zum Bestimmen eines Wasserstands (10) in einem Umgebungsbereich (6) eines Kraftfahrzeugs (2) mittels einer Fahrerassistenzvorrichtung (1) des Kraftfahrzeugs (2), mit den Schritten:
- Aussenden eines Sendesignals (30) in den Umgebungsbereich (6) des Kraftfahrzeugs (2) mittels eines Sensors (3) der Fahrerassistenzvorrichtung (1),
- Empfangen eines in dem Umgebungsbereich (6) reflektierten Signalanteils des Sendesignals (30) als Empfangssignal (37), und
- Bestimmen eines zeitlichen Versatzes zwischen dem Sendesignal (30) und einem Empfangsecho (31, 32, 33, 34, 35, 36) des Empfangssignals (37),
**dadurch gekennzeichnet, dass** das Empfangssignal (37) mehrere Empfangsechos (31, 32, 33, 34, 35, 36) umfasst und das Verfahren folgende Schritte aufweist:
- Überprüfen, ob der zeitliche Versatz innerhalb eines vorgegebenen Wertebereichs (39) um einen Versatzwert (40) liegt, welcher einem Abstand eines Empfangsechos verursachenden Anbauteils (9) des Kraftfahrzeugs (2) zum Sensor (3) entspricht, und,
- falls der zeitliche Versatz außerhalb des vorgegebenen Wertebereichs (39) liegt, Bestimmen des Wasserstands (10) anhand des zeitlichen Versatzes,
- falls der zeitliche Versatz innerhalb des vorgegebenen Wertebereichs (39) liegt, Bestimmen eines zeitlichen Versatzes zwischen dem Sendesignal (30) und zumindest einem weiteren Empfangsecho (31, 32, 33, 34, 35, 36) des Empfangssignals (37) für das Bestimmen des Wasserstands (10).

2. Verfahren nach Anspruch 1,
**dadurch gekennzeichnet, dass**
das Sendesignal (30) mittels eines Ultraschallsensors ausgesendet wird.

3. Verfahren nach Anspruch 1 oder 2,
**dadurch gekennzeichnet, dass**
das Sendesignal (30) mittels eines Sensors (3) ausgesendet wird, dessen Haupterfassungsrichtung (5) parallel zur Fahrzeughochachse (z) orientiert ist.

4. Verfahren nach einem der vorhergehenden Ansprüche,
**dadurch gekennzeichnet, dass**
das Sendesignal (30) mittels eines Sensors (3) ausgesendet wird, der an einem weiterem Anbauteil (4) des Kraftfahrzeugs (2) angeordnet ist, welches ein dem weiteren Anbauteil (4) benachbartes Außenbeplankungselement des Kraftfahrzeugs (2) nach außen überragt, wobei der Sensor (3) insbesondere an einem Außenspiegel des Kraftfahrzeugs (2) angeordnet ist.

5. Verfahren nach einem der vorhergehenden Ansprüche,
**dadurch gekennzeichnet, dass**
falls der zeitliche Versatz des zumindest einen weiteren Empfangsechos (31, 32, 33, 34, 35, 36) gegenüber dem Sendesignal (30) außerhalb des vorgegebenen Wertebereichs (39) liegt, der Wasserstand (10) anhand des zeitlichen Versatzes dieses Empfangsechos (31, 32, 33, 34, 35, 36) bestimmt wird.

6. Verfahren nach einem der vorhergehenden Ansprüche,
**dadurch gekennzeichnet, dass**
mehrere Empfangsechos (31, 32, 33, 34, 35, 36) des Empfangssignals (37) in der Reihenfolge ihres Eintreffens an dem Sensor (3) auf ihren jeweiligen zeitlichen Versatz hin überprüft werden und der Wasserstand (10) anhand desjenigen Empfangsechos (31, 32, 33, 34, 35, 36) bestimmt wird, dessen Versatz als erster als außerhalb des vorgegebenen Wertbereichs (39) liegend detektiert wird.

7. Verfahren nach einem der vorhergehenden Ansprüche,
**dadurch gekennzeichnet, dass**
falls die zeitlichen Versätze aller Empfangsechos (31, 32, 33, 34, 35, 36) des Empfangssignals (37) innerhalb des vorgegebenen Wertebereichs (39) liegen, ein Neigungswinkel des Kraftfahrzeugs (2), insbesondere der Rollwinkel, bestimmt und mit einem vorgegebenen Grenzwert verglichen wird, wobei das weitere Bestimmen des Wasserstandes abhängig von dem Vergleich erfolgt.

8. Verfahren nach Anspruch 7,
**dadurch gekennzeichnet, dass**
das Bestimmen des Wasserstands (10) anhand des Empfangssignals (37) unterbleibt, falls der Neigungswinkel des Kraftfahrzeugs (2) größer ist als der vorgegebene Grenzwert.

9. Verfahren nach Anspruch 7 oder 8,
**dadurch gekennzeichnet, dass**
der Wasserstand (10) anhand des zeitlichen Versatzes zumindest eines der Empfangsechos (31, 32, 33, 34, 35, 36) gegenüber dem Sendesignal (30) bestimmt wird, falls der Neigungswinkel des Kraftfahrzeugs (2) kleiner ist als der vorgegebene Grenzwert.

10. Verfahren nach Anspruch 9,
**dadurch gekennzeichnet, dass**
der Wasserstand (10) anhand desjenigen Empfangsechos (31, 32, 33, 34, 35, 36) bestimmt wird, welches den kleinsten zeitlichen Versatz aufweist.

11. Fahrerassistenzvorrichtung (1) für ein Kraftfahrzeug (2), mit einem Sensor (3) zum Aussenden eines Sendesignals (30) in einen Umgebungsbereich (6) des Kraftfahrzeugs (2) und zum Empfangen eines in dem Umgebungsbereich (6) reflektierten Signalanteils des Sendesignals (30) als ein Empfangssignal (37) und mit einer Recheneinheit (7) zum Bestimmen eines Wasserstands (10) in dem Umgebungsbereich (6) anhand des Empfangssignals (37),wobei die Recheneinheit (7) dazu ausgelegt ist,
- einen zeitlichen Versatz zwischen dem Sendesignal (30) und einem Empfangsecho (31, 32, 33, 34, 35, 36) zu bestimmen,
**dadurch gekennzeichnet, dass** das Empfangssignal (37) mehrere Empfangsechos (31, 32, 33, 34, 35, 36) umfasst und die Recheneinheit (7) dazu ausgelegt ist,
- zu überprüfen, ob der zeitliche Versatz innerhalb eines vorgegebenen Wertebereichs (39) um einen Versatzwert (40) liegt, welcher einem Abstand eines Empfangsechos verursachenden Anbauteils (9) des Kraftfahrzeugs (2) zum Sensor (3) entspricht,
- falls der zeitliche Versatz außerhalb des vorgegebenen Wertebereichs (39) liegt, den Wasserstand (10) anhand dieses zeitlichen Versatzes zu bestimmen, und
- falls der zeitliche Versatz innerhalb des vorgegebenen Wertebereichs (39) liegt, einen zeitlichen Versatz zwischen dem Sendesignal (30) und zumindest einem weiteren Empfangsecho (31, 32, 33, 34, 35, 36) des Empfangssignals (37) für das Bestimmen des Wasserstands (10) zu bestimmen.

12. Kraftfahrzeug (2) mit einer Fahrerassistenzvorrichtung (1) nach Anspruch 11.

## Claims

1. Method for determining a water level (10) in a surrounding area (6) of a motor vehicle (2) by means of a driver assistance apparatus (1) of the motor vehicle (2), having the steps of:
- emitting a transmission signal (30) into the surrounding area (6) of the motor vehicle (2) by means of a sensor (3) of the driver assistance apparatus (1),
- receiving a signal component of the transmission signal (30), which is reflected in the surrounding area (6), as a reception signal (37), and
- determining a temporal offset between the transmission signal (30) and a reception echo (31, 32, 33, 34, 35, 36) of the reception signal (37),
**characterized in that** the reception signal (37) comprises a plurality of reception echoes (31, 32, 33, 34, 35, 36) and the method has the following steps of:
- checking whether the temporal offset is within a predefined range of values (39) around an offset value (40) which corresponds to a distance between an attachment part (9) of the motor vehicle (2), which causes reception echoes, and the sensor (3), and
- determining the water level (10) on the basis of the temporal offset if the temporal offset is outside the predefined range of values (39),
- determining a temporal offset between the transmission signal (30) and at least one further reception echo (31, 32, 33, 34, 35, 36) of the reception signal (37) if the temporal offset is within the predefined range of values (39) in order to determine the water level (10).

2. Method according to Claim 1,
**characterized in that**
the transmission signal (30) is emitted by means of an ultrasonic sensor.

3. Method according to Claim 1 or 2,
**characterized in that**
the transmission signal (30) is emitted by means of a sensor (3), the main sensing direction (5) of which is oriented parallel to the vehicle vertical axis (z).

4. Method according to one of the preceding claims, **characterized in that**
the transmission signal (30) is emitted by means of a sensor (3) which is arranged on a further attachment part (4) of the motor vehicle (2) which externally towers above an outer panelling element of the motor vehicle (2) which is adjacent to the further attachment part (4), the sensor (3) being arranged on an exterior mirror of the motor vehicle (2), in particular.

5. Method according to one of the preceding claims,
**characterized in that**
if the temporal offset of the at least one further reception echo (31, 32, 33, 34, 35, 36) with respect to the transmission signal (30) is outside the predefined range of values (39), the water level (10) is determined on the basis of the temporal offset of this reception echo (31, 32, 33, 34, 35, 36).

6. Method according to one of the preceding claims,
**characterized in that**
a plurality of reception echoes (31, 32, 33, 34, 35, 36) of the reception signal (37) are checked for their respective temporal offset in the order in which they arrive at the sensor (3) and the water level (10) is determined on the basis of that reception echo (31, 32, 33, 34, 35, 36) whose offset is the first to be detected as being outside the predefined range of values (39).

7. Method according to one of the preceding claims,
**characterized in that**
if the temporal offsets of all reception echoes (31, 32, 33, 34, 35, 36) of the reception signal (37) are within the predefined range of values (39), an inclination angle of the motor vehicle (2), in particular the roll angle, is determined and is compared with a predefined limit value, the further determination of the water level being carried out on the basis of the comparison.

8. Method according to Claim 7,
**characterized in that**
the water level (10) is not determined on the basis of the reception signal (37) if the inclination angle of the motor vehicle (2) is greater than the predefined limit value.

9. Method according to Claim 7 or 8,
**characterized in that**
the water level (10) is determined on the basis of the temporal offset of at least one of the reception echoes (31, 32, 33, 34, 35, 36) with respect to the transmission signal (30) if the inclination angle of the motor vehicle (2) is less than the predefined limit value.

10. Method according to Claim 9,
**characterized in that**
the water level (10) is determined on the basis of that reception echo (31, 32, 33, 34, 35, 36) which has the smallest temporal offset.

11. Driver assistance apparatus (1) for a motor vehicle (2), having a sensor (3) for emitting a transmission signal (30) into a surrounding area (6) of the motor vehicle (2) and for receiving a signal component of the transmission signal (30), which is reflected in the surrounding area (6), as a reception signal (37), and having a computing unit (7) for determining a water level (10) in the surrounding area (6) on the basis of the reception signal (37),
the computing unit (7) being designed
- to determine a temporal offset between the transmission signal (30) and a reception echo (31, 32, 33, 34, 35, 36),
**characterized in that** the reception signal (37) comprises a plurality of reception echoes (31, 32, 33, 34, 35, 36) and the computing unit (7) is designed
- to check whether the temporal offset is within a predefined range of values (39) around an offset value (40) which corresponds to a distance between an attachment part (9) of the motor vehicle (2), which causes reception echoes, and the sensor (3),
- if the temporal offset is outside the predefined range of values (39), to determine the water level (10) on the basis of this temporal offset, and
- to determine a temporal offset between the transmission signal (30) and at least one further reception echo (31, 32, 33, 34, 35, 36) of the reception signal (37) if the temporal offset is within the predefined range of values (39) in order to determine the water level (10).

12. Motor vehicle (2) having a driver assistance apparatus (1) according to Claim 11.

## Revendications

1. Procédé de détermination d'un niveau d'eau (10) dans un voisinage (6) d'un véhicule automobile (2) au moyen d'un dispositif d'assistance au conducteur (1) du véhicule automobile (2), comportant les étapes consistant à :
- émettre un signal d'émission (30) dans le voisinage (6) du véhicule automobile (2) au moyen d'un capteur (3) du dispositif d'assistance au conducteur (1),
- recevoir une partie de signal, du signal d'émission (30), réfléchie dans le voisinage (6) en tant que signal de réception (37), et
- déterminer un décalage temporel entre le signal d'émission (30) et un écho de réception (31, 32, 33, 34, 35, 36) du signal de réception (37),
**caractérisé en ce que** le signal de réception (37) comprend plusieurs échos de réception (31, 32, 33, 34, 35, 36) et **en ce que** le procédé comprend les étapes consistant à :
- vérifier si le décalage temporel se situe à l'intérieur d'une plage de valeurs (39) prédéterminée autour d'une valeur de décalage (40) qui correspond à une distance entre un élément constitutif (9), qui provoque l'écho de réception, du véhicule automobile (2) et le capteur (3), et,
- dans le cas où le décalage temporel se situe à l'extérieur de la plage de valeurs (39) prédéterminée, déterminer le niveau d'eau (10) sur la base du décalage temporel,
- dans le cas où le décalage temporel se situe à l'intérieur de la plage de valeurs (39) prédéterminée, déterminer un décalage temporel entre le signal d'émission (30) et au moins un autre écho de réception (31, 32, 33, 34, 35, 36) du signal de réception (37) pour déterminer le niveau d'eau (10).

2. Procédé selon la revendication 1,
**caractérisé en ce que** le signal d'émission (30) est émis au moyen d'un capteur à ultrasons.

3. Procédé selon la revendication 1 ou 2, **caractérisé en ce que** le signal d'émission (30) est émis au moyen d'un capteur (3) dont la direction de détection principale (5) est orientée parallèlement à l'axe vertical (z) du véhicule.

4. Procédé selon l'une quelconque des revendications précédentes,
**caractérisé en ce que** le signal d'émission (30) est émis par un capteur (3) qui est disposé sur un autre élément constitutif (4) du véhicule automobile (2), qui dépasse vers l'extérieur d'un élément de parement extérieur, voisin dudit autre élément constitutif (4), du véhicule automobile (2), dans lequel le capteur (3) est notamment disposé sur un rétroviseur extérieur du véhicule automobile (2).

5. Procédé selon l'une quelconque des revendications précédentes,
**caractérisé en ce que**, dans le cas où le décalage temporel dudit au moins un autre écho de réception (31, 32, 33, 34, 35, 36) par rapport au signal d'émission (30) se situe à l'extérieur de la plage de valeurs (39) prédéterminée, le niveau d'eau (10) est déterminé sur la base du décalage temporel dudit écho de réception (31, 32, 33, 34, 35, 36).

6. Procédé selon l'une quelconque des revendications précédentes,
**caractérisé en ce que** plusieurs échos de réception (31, 32, 33, 34, 35, 36) du signal de réception (37) sont vérifiés selon leur séquence d'apparition au niveau du capteur (3) en ce qui concerne leur décalage temporel respectif et **en ce que** le niveau d'eau (10) est déterminé sur la base de l'écho de réception (31, 32, 33, 34, 35, 36) dont le décalage est détecté comme étant le premier se situant à l'extérieur de la plage de valeurs (39) prédéterminée.

7. Procédé selon l'une quelconque des revendications précédentes,
**caractérisé en ce que**, dans le cas où les décalages temporels de tous les échos de réception (31, 32, 33, 34, 35, 36) du signal de réception (37) se situent à l'intérieur de la plage de valeurs (39) prédéterminée, un angle d'inclinaison du véhicule automobile (2), notamment un angle de roulis, est déterminé et est comparé à une valeur limite prédéterminée, dans lequel l'autre détermination du niveau d'eau est effectuée en fonction de la comparaison.

8. Procédé selon la revendication 7,
**caractérisé en ce que** la détermination du niveau d'eau (10) sur la base du signal de réception (37) n'est pas effectuée dans le cas où l'angle d'inclinaison du véhicule automobile (2) est supérieur à la valeur limite prédéterminée.

9. Procédé selon la revendication 7 ou 8,
**caractérisé en ce que** le niveau d'eau (10) est déterminé sur la base du décalage temporel d'au moins l'un des échos de réception (31, 32, 33, 34, 35, 36) par rapport au signal d'émission (30) dans le cas où l'angle d'inclinaison du véhicule automobile (2) est inférieur à la valeur limite prédéterminée.

10. Procédé selon la revendication 9,
**caractérisé en ce que** le niveau d'eau (10) est déterminé sur la base de l'écho de réception (31, 32, 33, 34, 35, 36) ayant le décalage temporel le plus petit.

11. Dispositif d'assistance au conducteur (1) destiné à un véhicule automobile (2), comportant un capteur (3) destiné à émettre un signal d'émission (30) dans un voisinage (6) du véhicule automobile (2) et à recevoir une partie de signal, réfléchie dans le voisinage (6), du signal d'émission (30) en tant que signal de réception (37), et comportant une unité de calcul (7) destinée à déterminer un niveau d'eau (10) dans le voisinage (6) sur la base du signal de réception (37), dans lequel l'unité de calcul (7) est conçue pour
- déterminer un décalage temporel entre le signal d'émission (30) et un écho de réception (31, 32, 33, 34, 35, 36),
**caractérisé en ce que** le signal de réception (37) comprend plusieurs échos de réception (31, 32, 33, 34, 35, 36) et **en ce que** l'unité de calcul (7) est conçue pour
- vérifier si le décalage temporel se situe à l'intérieur d'une plage de valeurs (39) prédéterminée autour d'une valeur de décalage (40) qui correspond à une distance entre un élément constitutif (9), qui provoque l'écho de réception, du véhicule automobile (2) et le capteur (3),
- dans le cas où le décalage temporel se situe à l'extérieur de la plage de valeurs (39) prédéterminée, déterminer le niveau d'eau (10) sur la base dudit décalage temporel, et
- dans le cas où le décalage temporel se situe à l'intérieur de la plage de valeurs (39) prédéterminée, déterminer un décalage temporel entre le signal d'émission (30) et au moins un autre écho de réception (31, 32, 33, 34, 35, 36) du signal de réception (37) pour la détermination du niveau d'eau (10).

12. Véhicule automobile (2) comportant un dispositif d'assistance au conducteur (1) selon la revendication 11.
